# FASCICULE DE BREVET EUROPEEN

(11) **EP 1 592 959 B1**
(45) Date de publication et mention de la délivrance du brevet: **15.03.2017**
(21) Numéro de dépôt: 03780214.7
(22) Date de dépôt: 10.10.2003
(51) Int. Cl.: C23F 13/02, G01M 3/40, G01M 3/04, G01M 3/18

(54) **METHODE DE TEST DE RESERVOIR CRYOGENIQUE COMPORTANT UNE PROTECTION CATHODIQUE**
VERFAHREN ZUM TESTEN EINES TIEFTEMPERATURTANKS MIT KATHODISCHEM SCHUTZ
METHOD OF TESTING A CRYOGENIC STORAGE VESSEL WITH CATHODIC PROTECTION

(30) Priorité: 14.02.2003 FR 0301813
(43) Date de publication de la demande: 09.11.2005
(73) Titulaire: SAIPEM S.A., 78180 Montigny-le-Bretonneux (FR)
(72) Inventeur: BOREAVE, Alphonse, 20148 MILANO (IT)
(74) Mandataire: Domange, Maxime
(86) Numéro de dépôt international: PCT/FR2003/003007
(87) Numéro de publication internationale: WO 2004/081543

(56) Documents cités:
- EP-A- 0 258 170
- FR-A- 1 082 119
- US-A- 2 941 935
- US-A- 3 855 102
- US-A- 4 796 676
- US-A- 4 936 969
- US-A- 5 643 424
- US-A- 6 132 593
- US-B1- 6 511 586

## Description

La présente invention est relative aux réservoirs de stockage cryogénique de gaz liquéfiés.

Plus particulièrement, la présente invention concerne une méthode de test d'étanchéité et de résistance mécanique d'un réservoir cryogénique avant mise en service. Plus particulièrement encore, la présente invention concerne une méthode de protection cathodique d'un réservoir cryogénique métallique.

Les réservoirs cryogéniques de gaz liquéfiés sont en général testés en résistance et en étanchéité avant mise en service en les remplissant d'eau douce. Ce remplissage est effectué de préférence en augmentant la pression au sein du réservoir, de manière à accentuer la mise en évidence de fuites éventuelles.

Simultanément, ce remplissage d'eau permet de tester la résistance mécanique de la partie la plus sollicitée du réservoir, à savoir la partie basse du réservoir, car la différence de densité de l'eau par rapport au gaz liquide (d=0.48 pour le méthane liquide à -170°C), permet alors d'appliquer des forces deux fois supérieures aux efforts maximaux en fonctionnement en charge dans le réservoir rempli de gaz liquéfié. De plus, dans le cas de réservoirs terrestres ce test permet de tester de manière simultanée la résistance mécanique des éléments de fondation qui supportent le réservoir qui se trouvera sous charge double par rapport au fonctionnement normal en charge.

Les réservoirs cryogéniques sont réalisés dans des aciers spéciaux, en particulier l'acier dit «acier à 9% de nickel» qui correspond à la norme ASTM A-353 ou A-353-Type1, correspondant à la composition chimique suivante :
- Carbone (max) : 0.13% ,
- Manganèse (max) : 0.90% ,
- Phosphore (max) : 0.035% ,
- Soufre (max) : 0.035% ,
- Silicium : 0.15-0.40% ,
- Nickel 8.50-9.50%,
- le restant étant constitué de fer.
Ce type d'acier est utilisé pour les réservoirs cryogéniques car il présente des propriétés avantageuses pour les applications cryogéniques, notamment un bon comportement mécanique et une bonne résilience aux températures cryogéniques. Toutefois, ils présentent la particularité d'être très sensible à la corrosion en présence d'eau, en particulier dès lors que cette dernière n'ait pas un pH totalement neutre, notamment bien évidemment en présence d'eau de mer.

Les phénomènes de corrosion que l'on peut rencontrer sont en général localisés et accentués dans des zones de transition, c'est-à-dire au niveau des soudures, ou encore au niveau des défauts de matières qui peuvent se produire lors des coulées de matières de base et du laminage des tôles ou des profilés constitutifs de ladite paroi dudit réservoir métallique. Il est donc essentiel de garantir l'intégrité absolue de l'intégralité du réservoir métallique de confinement du gaz cryogénique pendant ce test à l'eau.

Pour effectuer les tests d'étanchéité et de résistance mécanique, avec remplissage d'eau des réservoirs cryogéniques, on remplit en général le réservoir avec de l'eau douce, dans lequel on rajoute éventuellement des additifs chimiques passivants, de manière à limiter la corrosion. On préfère garder le métal à nu car l'application d'une peinture anti-corrosion pour le seul test de remplissage serait d'un coût inacceptable.

Le remplissage d'eau du réservoir permet d'en tester l'étanchéité en observant la paroi du réservoir depuis l'extérieur, notamment au niveau de la paroi verticale latérale ou au niveau du raccordement entre la paroi verticale latérale et la paroi de fond du réservoir. Ce remplissage d'eau permet également de tester la résistance de la fondation sur laquelle repose le réservoir en mesurant l'enfoncement global ou localisé de la structure sous une charge correspondant sensiblement au double de la charge qu'elle aura à supporter en remplissage normal avec du gaz liquide. Enfin, ce test de remplissage d'eau permet d'effectuer le détensionnement des soudures, notamment les soudures situées dans la zone de raccordement entre la paroi verticale et la paroi de fond du réservoir par le simple effet de la pressurisation due à la pression d'eau régnant au niveau du fond du réservoir qui représente environ 5 bars pour un réservoir de 50 m de hauteur, suivie du vidage du réservoir.

La durée du test d'étanchéité et de résistance mécanique de remplissage en eau est longue, essentiellement liée au temps requis pour le remplissage dudit réservoir et effectuer les diverses mesures et vérifications, soit en pratique une durée qui peut dépasser huit semaines, durée suffisante pour générer des problèmes de corrosion pour un acier particulièrement sensible.

D'autre part, l'utilisation d'eau douce représente actuellement un problème majeur tant sur le plan économique que sur le plan écologique, car sa disponibilité est en général réduite alors que les quantités correspondant au volume des réservoirs cryogéniques mis en oeuvre peut atteindre 150.000 m3, voire jusqu'à 250 000m3. De plus, le coût d'un tel volume d'eau douce intervient alors pour un pourcentage très significatif dans le coût global de l'ouvrage une fois terminé. Enfin, le soutirage de l'eau douce ne peut s'effectuer qu'avec un débit horaire limité, de manière à ne pas perturber de manière significative le réseau de distribution d'eau, ce qui en conséquence implique des temps de remplissage importants, et augmente d'autant les risques de corrosion, sans compter l'augmentation du temps de mise à disposition de l'installation. A cet égard, il convient d'ajouter enfin, que l'on peut être amené à rajouter des inhibiteurs de corrosion en cas de présence de chlorures, ou encore des agents passivants pour corriger un pH trop agressif. Dès lors, en plus du coût supplémentaire engendré par l'ajout de ces additifs, les règlements d'environnement limitent les conditions de rejets dans le milieu naturel de l'eau lors du vidage du réservoir à la fin du test, à des débits que ledit milieu naturel est capable d'absorber. Pour cette raison, on peut être amené à devoir limiter la vitesse de purge du réservoir en fin de test, ce qui retarde encore d'autant plus la mise à disposition des installations.

Un premier but selon la présente invention est donc de fournir une nouvelle méthode de réalisation de test d'étanchéité et de résistance mécanique de réservoirs métalliques cryogéniques avant mise en service, qui ne présente pas les inconvénients mentionnés ci-dessus, en particulier qui soit moins onéreuse et plus efficace pour éviter la corrosion dudit réservoir métallique.

Selon une caractéristique originale de la présente invention, on réalise de telles méthodes de test de réservoirs métalliques cryogéniques par remplissage d'eau de mer.

Du fait que les terminaux de stockage de gaz liquéfié sont en général situés en zone portuaire, l'utilisation directe de l'eau de mer présente l'avantage d'une fourniture gratuite. De plus, il est très simple d'organiser le point de captage pour pouvoir prélever la quantité d'eau désirée avec des débits horaires considérables, alors qu'en cas de prélèvement d'eau douce sur le réseau ou encore d'eau brute dans une rivière, on est en général considérablement limité en débit, de manière à ne pas perturber l'environnement ou le réseau de manière inacceptable. Le remplissage à l'eau de mer peut s'effectuer 10 à 20 fois plus vite, ce qui réduit d'autant la durée de mise en eau et par conséquent la mise à la disposition du réservoir, car la durée des tests aura été réduite d'autant.

En présence d'eau de mer, une corrosion intense se produit immédiatement et se concentre surtout dans la zone du réservoir affecté thermiquement par les soudures réalisées entre les plaques d'acier et plus particulièrement encore dans la partie basse du réservoir, comme mentionné ci-dessus. Mais la présente invention permet d'effectuer un test de réservoirs cryogéniques en utilisant avantageusement de l'eau de mer en remplacement de l'eau douce, tout en garantissant l'intégrité de l'ensemble des parois métalliques du réservoir tant au niveau du fond qu'au niveau des parois verticales du réservoir, en dépit du fort effet corrosif de l'eau de mer.

Un autre but de la présente invention est donc de fournir une méthode de protection anti-corrosion renforcée pour un réservoir métallique cryogénique lors des tests de remplissage d'eau en mise en service, et ce de préférence sans mise en oeuvre d'une peinture de protection, à savoir en conservant le métal à nu.

On connaît, notamment dans US 2,941,935 et US 3,855,102, des principes de protection cathodique anti-corrosion de longue durée de réservoirs métalliques contenant de l'eau douce à l'aide d'anodes reliées en chapelets et suspendues verticalement à l'intérieur dudit réservoir au sein du volume d'eau contenu, anodes dans lesquelles on injecte un courant électrique.

Cette protection cathodique permet d'assurer la protection contre la corrosion résultant du contact entre les parois métalliques et l'eau en complément à des revêtements anti-corrosion de type peinture. On rappelle que le principe de la protection cathodique consiste à abaisser artificiellement le potentiel électrochimique (E) naturel du métal à protéger, afin de saturer en électrons le milieu aqueux environnant qui a un pouvoir oxydant, et ainsi d'éviter la dissolution du métal, ladite saturation en électrons se faisant par le biais d'anodes métalliques immergées dans ledit milieu aqueux constituant un électrolyte de pH donné, anodes dans lesquelles on injecte un courant électrique continu.

A cet effet il est d'usage de considérer le diagramme dit de Pourbaix qui détermine, en fonction du pH et du type d'électrolyte, les valeurs potentielles électrochimiques d'immunité du métal concerné, c'est-à-dire le potentiel électrochimique en-dessous duquel le métal sera protégé cathodiquement, c'est à dire correctement polarisé.

Cette polarisation n'est pas instantanée, mais se constitue lentement de proche en proche autour de l'anode, pour atteindre enfin le niveau souhaité sur toute la surface d'action de ladite anode. Dans les systèmes de protection cathodique couramment mis en oeuvre, la polarisation de la surface métallique à protéger prend en général plusieurs semaines, voire plusieurs mois, avant d'être complètement effective. Dans les systèmes de protection cathodique couramment mis en oeuvre, on cherche à limiter la consommation d'électricité à une valeur raisonnable, car ce courant doit être maintenu en permanence pendant toute la durée de vie de l'ouvrage.

En pratique, les protections cathodiques viennent en complément de revêtements anti-corrosion qui assurent une protection efficace, mais on prévoit en plus une installation avec des anodes et une alimentation en courant telle que l'on puisse générer une densité de courant d'environ 50 mA/m² qui correspond à une densité suffisante pour assurer une protection cathodique efficace dans le temps, dans les zones ou le revêtement anti-corrosion serait endommagé, zone que l'on évalue en général à 10 ou 20% de la surface totale peinte en contact avec l'eau.

On connaît dans le brevet US 4,936,969 un système de protection cathodique qui consiste à maintenir en suspension à mi hauteur au sein d'un réservoir d'eau douce grâce à des éléments de flottabilité et des orins de maintien, un câble conducteur faisant fonction d'anode continue d'injection de courant imposé. Ce dispositif d'anode sous forme de câble présente une faible capacité d'injection de courant, mais elle est suffisante pour protéger un tel réservoir d'eau douce sur une très longue durée. En revanche; le processus de polarisation initial est très lent et ne permettrait pas d'assurer une protection cathodique effective de manière à éviter toute amorce de corrosion dans un test de remplissage de réservoir cryogénique avec des aciers à nu très sensibles à la corrosion.

L'injection de courant est proportionnelle à la surface à protéger et la pratique courante limite en général cette valeur à 80 mA/m² pour les aciers courants non alliés, suffisante pour assurer une protection cathodique efficace dans le temps, limitant ainsi la consommation d'électricité à une valeur raisonnable car ce courant doit être maintenu en permanence pendant toute la durée de vie de l'ouvrage.

Plus précisément, la présente invention fournit une méthode de test d'un réservoir métallique cryogénique avant mise en service, selon la revendication 1.

Lors du remplissage du réservoir, au début, on réalise le mouillage rapide d'une grande superficie de parois du réservoir, à savoir la paroi de fond du réservoir, dont la périphérie constitue de surcroît une des zones les plus fragiles. Selon la présente invention, pour que la protection anti-corrosion soit effective le plus rapidement possible après le début du remplissage afin d'éviter toute amorce de corrosion, et on dispose un réseau de première(s) anode(s) à proximité immédiate du fond du réservoir à l'aide de moyens de support, lesdits moyens de support et dite(s) première(s) anode(s) étant de préférence amovibles.

Cette position des anodes à proximité du fond du réservoir permet que lesdites anodes soient immergées, et donc entrent en action, le plus rapidement possible. On comprend donc que lesdits moyens de support permettent de maintenir lesdites premières anodes à proximité du fond du réservoir, mais en les maintenant écartées du fond pour éviter tout contact électrique entre lesdites anodes et ledit fond.

On entend ici par « amovible » que lesdites premières anodes et dits moyens de support peuvent être sortis dudit réservoir à la fin du test.

Plus particulièrement, lesdites premières anodes à proximité du fond du réservoir sont situées à une distance inférieure à 50 cm, de préférence de 2,5 à 20 cm, de préférence encore de 5 à 10 cm au-dessus du fond du réservoir. Cette distance optimale permet d'éviter non seulement un contact électrique entre lesdites anodes et le fond métallique du réservoir mais aussi un court circuit électrolytique qui pourrait être provoqué par une trop grande proximité de l'anode. Ainsi, de par la proximité de l'anode et du fond du réservoir, on garde un maximum d'efficacité en évitant des risques de court circuit électrolytique.

Selon la présente invention, afin d'obtenir une protection cathodique optimale au fond du réservoir, lesdites premières anodes sont disposées le long d'un cercle concentrique par rapport au centre de la surface du fond du réservoir et, de préférence, le diamètre dudit cercle est de 40 à 75% de celui de la surface du fond du réservoir.

Cette disposition en cercle de la ou desdites premières anodes reposant au fond du réservoir représente une disposition optimale pour éviter les interférences entre les anodes ou les différentes parties d'une anode qui pourraient affecter négativement la densité de courant émise

On peut disposer lesdites anodes de manière à former une pluralité de cercles concentriques dans le cas de réservoir dont le fond représente une grande superficie. Toutefois, en pratique, pour des réservoirs jusqu'à 75-90 m de diamètre, avec des anodes de capacité de 50 A, une disposition de manière à former un seul cercle de diamètre compris entre 40 et 75% du diamètre du réservoir est suffisante.

Lesdites premières anodes peuvent être constituées par :
- une ou plusieurs anodes flexibles encore appelées « anodes filaires », il s'agit dans ce cas d'un câble métallique, ladite anode formant, de préférence, un cercle ou lesdites différentes premières anodes constituant des portions de cercle étant disposées le long d'un même cercle, et/ou
- une pluralité d'anodes rigides disposées de manière discontinue côte à côte et éventuellement reliées entre elles par un câble conducteur.

Toutefois, pour fournir une plus forte densité de courant, on préfère mettre en oeuvre desdites premières anodes constituées par une pluralité d'anodes rigides, celles-ci étant constituées notamment sous forme de bloc cylindrique, oblong ou sous forme de disque.

Plus particulièrement, lesdites premières anodes sont réunies par un ou plusieurs câbles pour former un ou respectivement plusieurs premiers chapelets, lesdits premiers chapelets étant disposés sensiblement horizontalement au-dessus et à proximité dudit fond du réservoir.

On entend ici par « chapelet d'anodes » que lesdites anodes rigides sont réunies par un câble comprenant un fil conducteur le long duquel sont disposées, de préférence à distance régulière, lesdites premières anodes, ledit fil étant électriquement isolé entre deux anodes successives, et le contact électrique est établi entre le fil et lesdites anodes.

Lesdites premières anodes sont rapprochées les unes des autres, notamment au sein d'un même chapelet, le plus possible, mais sont suffisamment espacées pour éviter les interférences électriques pouvant affecter négativement leur efficacité, c'est-à-dire la densité du courant émis..

Dans un mode de réalisation, lesdits moyens de support sont constitués par des éléments en matière isolante électriquement reposant sur le fond du réservoir et disposés de part et d'autre de chaque dite première anode, le cas échéant le long d'un dit premier chapelet.

Plus particulièrement encore, lesdits moyens de support sont constitués par des disques reposant verticalement sur le fond du réservoir, lesdits disques étant, le cas échéant, traversés en leur centre par des portions de câble isolé reliant deux dites premières anodes successives d'un dit premier chapelet, le diamètre desdits disques étant supérieur à la dimension desdites premières anodes dans la direction verticale.

Pour compléter la protection cathodique de la paroi verticale latérale du réservoir suite au mouillage du fond du réservoir, avantageusement on dispose à l'intérieur dudit réservoir desdites premières anodes disposées horizontalement à proximité du fond du réservoir, et des secondes anodes suspendues verticalement à l'intérieur du réservoir depuis son sommet, de préférence de façon amovible, les dites secondes anodes étant de préférence encore reliées en forme de seconds chapelets suspendus verticalement, lesdits seconds chapelets étant de préférence encore régulièrement espacés les uns des autres de manière à s'inscrire de préférence encore dans un cylindre circulaire de même axe que ledit réservoir.

Dans un mode de réalisation avantageux, les dernières dites secondes anodes disposées à l'extrémité inférieure desdits seconds chapelets suspendus verticalement sont situées à une hauteur H du fond de telle sorte que la superficie S₁ de la surface circulaire délimitée par lesdites premières anodes, est sensiblement égale à la superficie S₂ de la surface restante dudit fond du réservoir, additionnée de la superficie S₃ de la surface de la portion inférieure de hauteur H de la paroi latérale verticale dudit réservoir. La surface S₂ est la surface restante du fond du réservoir situé à l'extérieur de la surface S₁, et S₁ = S₂ + S₃.

On comprend que lesdites premières anodes présentent une capacité et sont en nombre et disposées de telle sorte qu'elles génèrent une densité de courant permettant d'atteindre le potentiel électrochimique approprié pour éviter l'apparition de la corrosion, et donc dans un temps inférieur au temps nécessaire pour l'apparition de corrosion, notamment dans un temps inférieur à une heure, de préférence inférieur à 20 minutes, et de préférence quasi instantanément, et ce en tout point de la surface du fond du réservoir (S₁+S₂), et le cas échéant, en tout point de la surface de la portion inférieure de hauteur H de la paroi latérale verticale du réservoir (S₃). Cette disposition desdites premières anodes reposant à proximité du fond du réservoir permet d'assurer une protection cathodique intégrale de la partie basse du réservoir (à savoir S₁+S₂+S_{3.}) avant que les secondes anodes suspendues verticalement destinées à la protection des parois latérales ne soient immergées et donc ne rentrent en action.

Des mesures effectuées selon la présente invention sur l'acier à 9% de nickel en présence d'eau de mer ont permis de mettre en évidence un potentiel électrochimique de protection d'immunité de -950 mV par rapport à une électrode de référence de type Ag/AgCl.

Ledit métal du réservoir est de l'acier à 9% de nickel et le potentiel électrochimique de protection dudit acier est de -950 mV, et lesdites premières anodes reposent à proximité du fond du réservoir de telle sorte qu'on peut atteindre une densité de courant de 200 à 400 mA/m². Cette densité de courant représente une valeur 4 à 8 fois supérieure aux valeurs courantes de densité de courant mises en oeuvre dans le domaine de la protection cathodique des réservoirs métalliques conventionnels contenant de l'eau, et pour lesquels la polarisation est maintenue pendant toute la durée de vie des installations.

Des chapelets d'anodes répartis bout à bout selon une figure géométrique circulaire sur le fond du réservoir permettent d'injecter des courants d'une densité de l'ordre de 200 à 400 mA/m²,

Selon la présente invention, la mise en oeuvre d'anodes de forte capacité notamment des anodes supportant des très forts courants d'injection de 50 A et capables de délivrer des densités de courant de 200 à 400 mA/m², et la forte densité d'anodes associée à un faible écartement de 25 à 500 mm entre les anodes à proximité du fond et le fond métallique du réservoir, permet d'atteindre le potentiel électrochimique d'immunité de -950 mV et d'activer rapidement, voire quasi instantanément le processus de polarisation de l'intégralité du fond du réservoir réalisé en acier à 9% de nickel dès que lesdites anodes sont mises en action après immersion par l'eau.

La présente invention permet donc d'effectuer un test à l'eau en utilisant avantageusement de l'eau de mer en remplacement de l'eau douce traditionnellement utilisée, tout en garantissant l'intégrité de l'ensemble de l'enveloppe de confinement, tant au niveau du fond qu'au niveau des parois verticales du réservoir.

Selon une autre caractéristique avantageuse de la présente invention, on remplit tout d'abord ledit réservoir avec de l'eau douce jusqu'à ce que lesdites premières anodes reposant à proximité immédiate du fond du réservoir soient complètement immergées, puis on injecte un courant électrique dans lesdites premières anodes et on continue le remplissage dudit réservoir avec de l'eau de mer.

Le remplissage initial avec de l'eau douce qui représente un faible volume d'eau compte tenu de la proximité desdites premières anodes par rapport au fond du réservoir, et permet de diminuer davantage encore les risques de corrosion avant que lesdites premières anodes puissent rentrer en action et effectuer une protection cathodique effective du fond du réservoir.

Avantageusement, selon une autre caractéristique de la présente invention, on dispose sur le fond et contre les parois dudit réservoir des dispositifs permettant de mesurer le potentiel électrochimique desdites parois et de commander une pluralité de générateurs électriques ou de contrôleurs pouvant alimenter en courant électrique de façon différenciée lesdites premières et secondes anodes de manière à pouvoir réguler la quantité de courant électrique injecté dans les différentes anodes en fonction desdites mesures effectuées en regard des différentes anodes selon leur localisation.

La présente invention a également pour objet un réservoir cryogénique à parois métalliques en acier nu selon la revendication 13.

D'autres caractéristiques et avantages de la présente invention apparaîtront à la lumière de la description détaillée de différents modes de réalisation qui va suivre, en référence aux figures suivantes.
La figure 1 représente une vue schématique en perspective éclatée d'un réservoir selon l'invention dans lequel un réseau d'anodes est alimenté en courant par des générateurs de courant électrique.
La figure 2 est une vue de côté en demi-coupe axiale d'un réservoir selon l'invention, détaillant un mode de jonction particulier entre un générateur d'alimentation électrique et des chapelets d'anodes.
La figure 3 représente une portion d'un chapelet d'anodes suspendues verticalement.
La figure 4 représente une portion d'un chapelet d'anodes reposant sur le fond du réservoir.
La figure 5 représente une vue de dessus en coupe montrant la répartition de différents chapelets d'anodes reposant sur le fond d'un réservoir selon une figure géométrique circulaire.
La figure 6 représente une vue en perspective d'une zone de la surface de la partie basse du réservoir en regard d'une anode reposant sur le fond.
Les figures 7a à 7d représentent des diagrammes dans lesquels l'anode est symbolisée par ■, avec en ordonnée la densité de courant polarisant (mA/m²) et en abscisse la distance à l'anode.
Les figures 8a et 8b représentent des courbes illustrant l'évolution potentielle électrochimique E (figure 8a) et de l'intensité du courant (I/m²) en un endroit M de la paroi métallique latérale ou du fond à protéger quelconque, le point M étant situé à une certaine distance de l'anode comme représenté sur la figure 8a.
La figure 9 représente un système de contrôle commande de l'injection du courant de polarisation.
La figure 10 représente la vue en plan d'un réservoir circulaire au fond duquel est installé, proche de la périphérie des chapelets d'anodes selon la figure 5 et vers le centre une anode circulaire constituée de deux demi-cercles continus maintenue à distance du sol par des disques isolants non représentés.
Les figures 11 et 12 représentent des chapelets d'anodes verticales équipées à leur partie inférieure d'une anode de forme cylindrique, oblong (fig. 11) ou sous forme de disque (fig 12) et reposant sur le fond, et isolée dudit fond par des disques (fig.11) ou des plots (fig.12) et jouant ainsi le rôle de dite première anode.

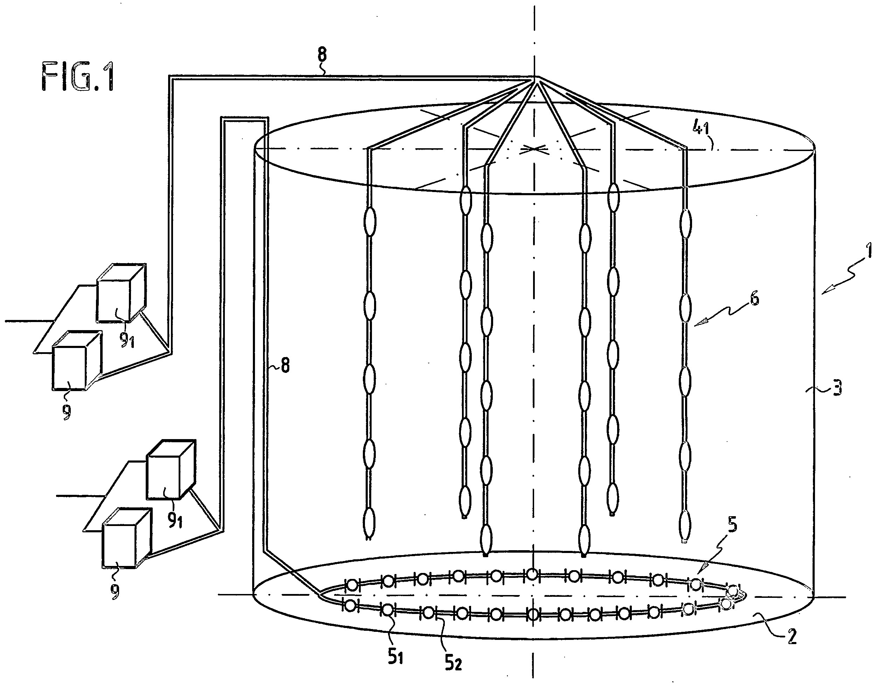

Sur la figure 1 on a représenté un réservoir métallique cylindrique circulaire 1 de grande capacité comprenant un fond 2 et une paroi circulaire cylindrique 3 servant à confiner un fluide cryogénique à stocker.

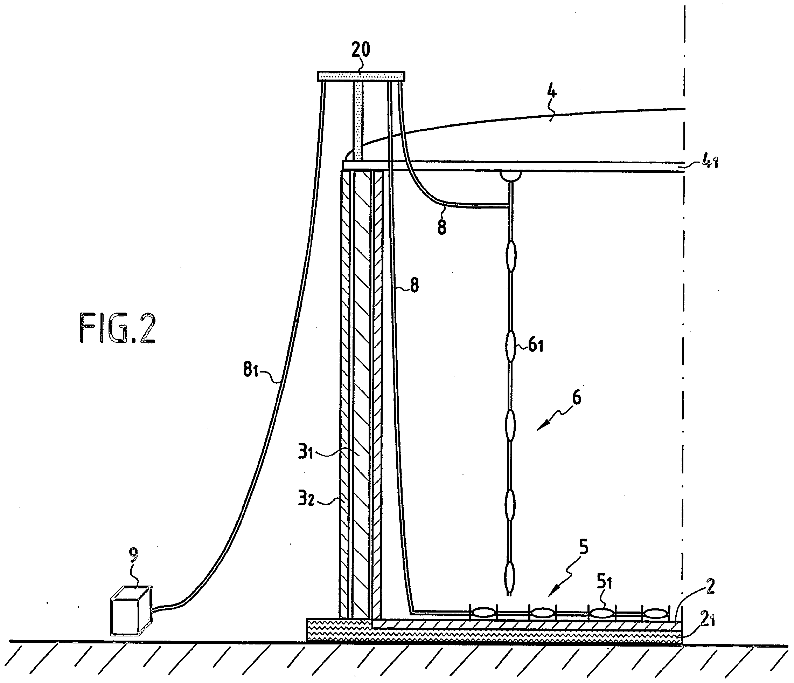

Sur la figure 2 on a représenté le système d'isolation du réservoir cylindrique métallique 1 lui conférant des propriétés cryogéniques constituées par une couche de matériau d'isolation thermique 3₁ elle-même entourée d'une structure rigide tubulaire constituée d'un voile de béton armé 3₂. Le réservoir 1 comprend en son sommet un couvercle en forme de dôme 4 soutenu par une armature métallique 4₁.

A titre d'exemple, le réservoir métallique cylindrique peut représenter un volume de 75 m de diamètre interne et 50 m de hauteur, soit un volume de 165.000 m³. La surface métallique globale des parois internes du réservoir à protéger par courant cathodique imposé, représente environ 16.000 m².

Il est réalisé avantageusement en acier à 9% de nickel tel que décrit ci-dessus et ses parois ont une épaisseur de 19 mm au niveau du fond 2 et, avantageusement, 28,8 mm d'extrémité inférieure des parois verticales latérales, cette épaisseur des parois verticales latérales se réduisant de manière sensiblement régulière vers le haut du réservoir pour atteindre une valeur minimale de 10 mm d'épaisseur dans la partie haute de la paroi verticale latérale 3 dudit réservoir.

Sur la figure 2, on a représenté un radier 2₁ de 130 cm d'épaisseur conférant une grande rigidité et intégrant un système d'isolation.

La couche d'isolation thermique 3₁ entourant la paroi métallique latérale 3 du réservoir 1 est réalisée par exemple en perlite et présente une épaisseur de 100 cm. Le voile externe 3₂ en béton armé présente une épaisseur de 80 cm.

Sur les figures 1, 5, 9 et 10, on a représenté différents modes de disposition desdites premières anodes disposées horizontalement à proximité du fond 2 du réservoir, selon des dispositions circulaires.

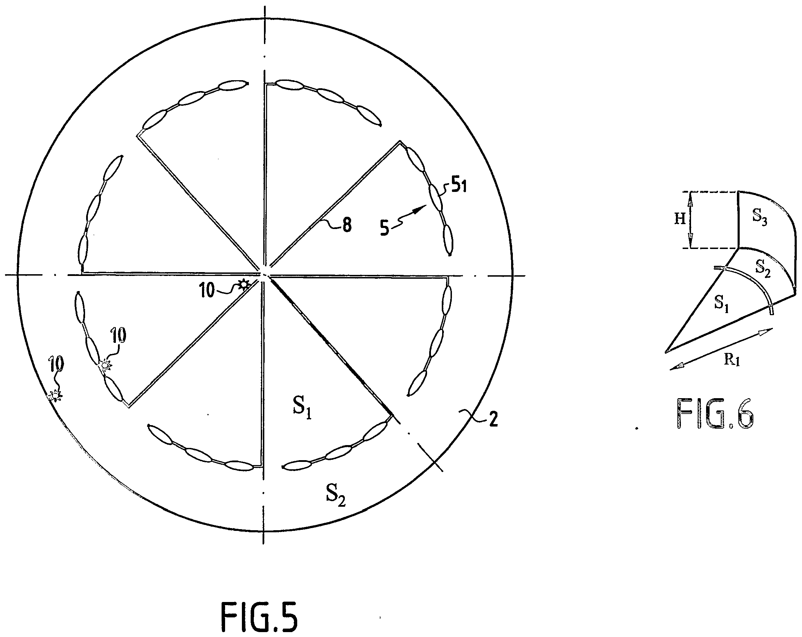

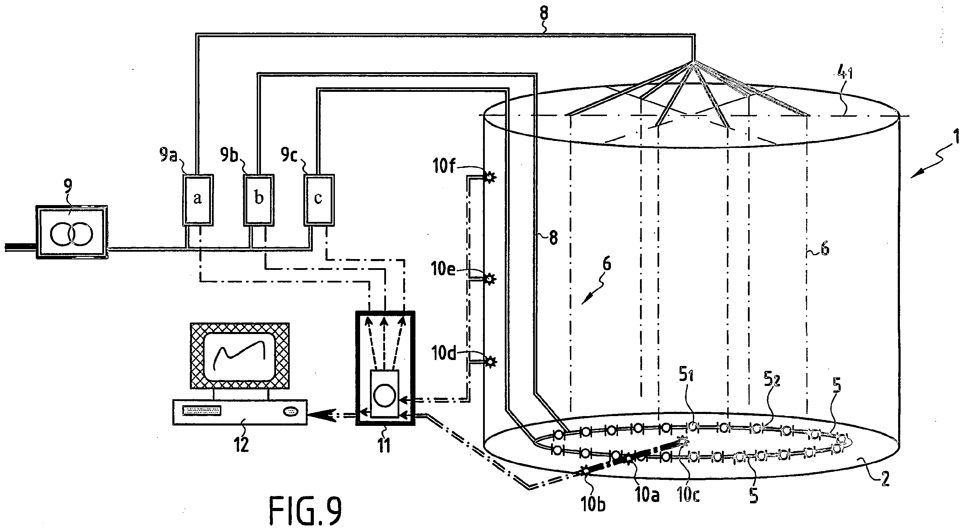

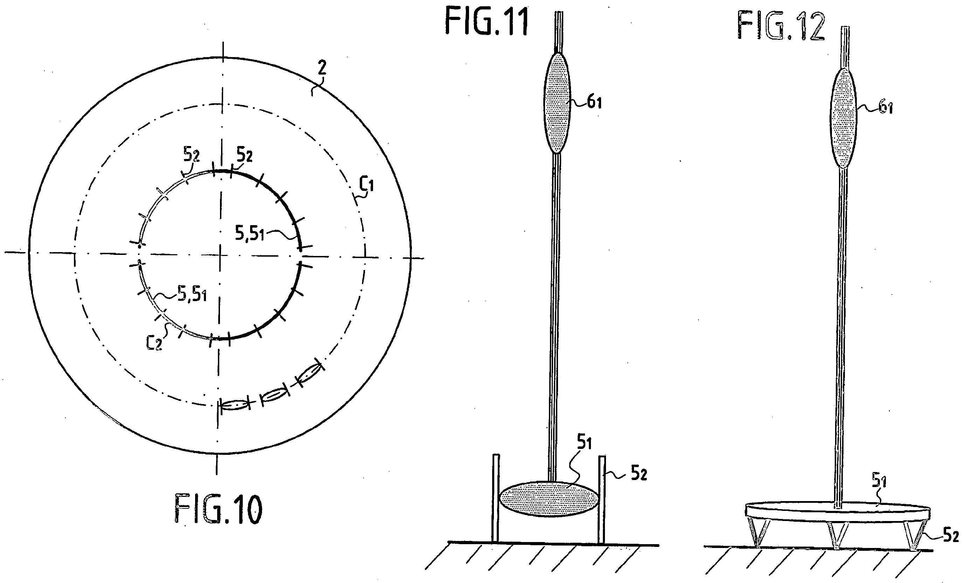

Sur la figure 1 lesdites premières anodes 5₁ forment un unique dit premier chapelet 5 disposé en cercle C₁. Sur la figure 9 lesdites premières anodes forment deux dits premiers chapelets 5, chacun formant sensiblement un demi cercle et les deux dits premiers chapelets étant disposés le long d'un cercle C₁. Sur la figure 5, lesdites premières anodes comprennent une pluralité de chapelets, à savoir 8 dits premiers chapelets horizontaux 5, chaque dit premier chapelet 5 comprenant 3 anodes 5₁. Lesdits premiers chapelets forment des portions de cercle et sont disposés régulièrement espacés le long d'un même cercle. Le mode de réalisation de la figure 5 avec plusieurs dits premiers chapelets est préféré car chaque dit premier chapelet peut être alimenté par un courant d'intensité différenciée de façon à doser l'intensité du courant en fonction des besoins selon les zones concernées. Pour les très grands réservoirs de diamètre notamment supérieur à 75 m, on peut coupler lesdits premiers chapelets 5 disposés le long d'un premier cercle C₁ avec des anodes flexibles filaires de plus faible capacité électrique, disposées le long d'un cercle C₂ de diamètre inférieur pour compléter la protection cathodique dans la zone centrale de la surface du fond du réservoir. Ainsi, sur la figure 10, on a disposé dans la zone centrale du fond du réservoir 2 dites premières anodes flexibles formées par un câble courbé disposées selon un cercle concentrique C₂, dont chaque dite première anode filaire parcourt sensiblement une demi circonférence. Cette seconde série de premières anodes disposées dans le cercle C₂ de plus petit diamètre assure ainsi une protection cathodique supplémentaire dans la partie centrale du fond 2 du réservoir.

Sur les figures 1 et 2, on a également représenté des seconds chapelets d'anodes 6 suspendus verticalement à la structure 4₁ du dôme 4 du réservoir.

Sur la figure 1 on a représenté la disposition préférentielle des différents seconds chapelets d'anodes verticaux 6, à savoir circulairement dans un plan de section horizontale.

Sur les figures 1 et 10 on a représenté six dits seconds chapelets verticaux 6 comprenant - pour des raisons de commodité de la représentation - chacun une pluralité d'anodes 6₁ régulièrement espacées, l'anode la plus basse étant située à une hauteur du sol H.

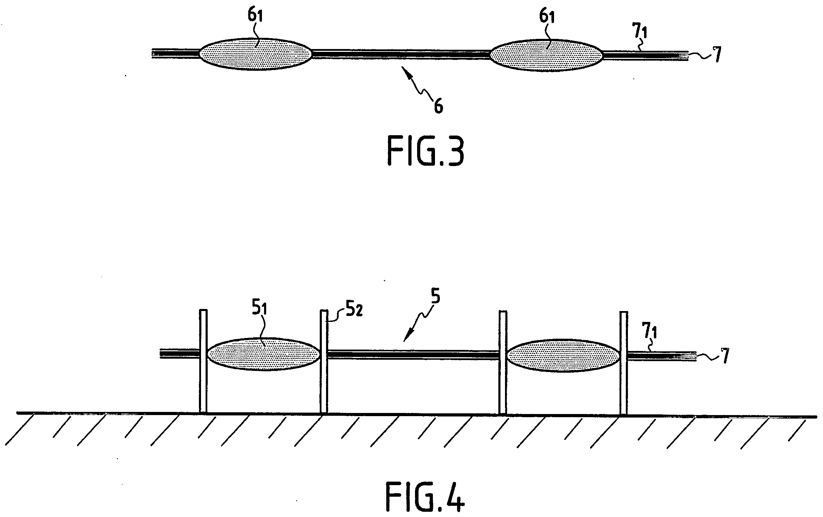

Sur les figures 3 et 4, les chapelets d'anodes 5, 6 sont constitués d'un câble conducteur 7, de préférence en cuivre, reliant lesdites anodes 5₁, 6₁ ou les traversant, celles-ci étant de préférence serties autour dudit câble 7 fixé mécaniquement.3 Lesdites anodes 5₁, 6₁ sont constituées en métal noble tel que le tungstène recouvert de divers métaux précieux. Lesdites anodes 5₁, 6₁ sont de préférence espacées de manière régulière le long dudit câble conducteur 7. Entre deux anodes 5₁, 6₁ d'un même chapelet 5₆ le câble 7 est isolé 7₁. Mais, bien évidemment le câble conducteur 7 est relié électriquement auxdites anodes 5₁, 6₁, seules les portions de câble entre deux anodes consécutives 5₁, 6₁ étant isolées.

Dans lesdits chapelets on utilise des anodes 5₁, 6₁ de forte capacité, à savoir 50 A, de forme cylindrique ou ovoïde mesurant environ chacune 1 m de longueur et 25 mm de diamètre extérieur et espacées de 3 à 5 m le long desdits chapelets, pour éviter les interférences et obtenir une densité de courant maximum.

Dans lesdits seconds chapelets verticaux 6, on a représenté simplement cinq anodes 6₁ pour des raisons de commodité de la représentation, étant entendu que pour un réservoir de 50 m de hauteur, un plus grand nombre de dites anodes est nécessaire.

Les chapelets horizontaux 5 sont maintenus à proximité immédiate du fond 2 du réservoir à l'aide d'éléments supports 5₂ constitués par exemple par des disques réalisés en matériau isolant et présentant un diamètre supérieur à celui des anodes 5₁, disposés autour du câble 7 de part et d'autre de chaque anode 5₁. Ces disques isolants 5₂ disposés verticalement et reposant par leur tranche sur le fond 2 du réservoir, présentent un diamètre externe de 225 mm, pour des anodes de 25 mm de diamètre, ce qui garantit un écartement sensiblement constant de 100 mm des anodes 5₁, par rapport au fond 2 du réservoir, qui permet à la fois d'éviter le contact électrique entre les anodes 5₁, et le fond 2, ainsi qu'un court circuit électrolytique.

Pour un réservoir de diamètre de 75 m, on dispose avantageusement lesdites premières anodes d'une pluralité de chapelets le long d'un cercle de diamètre R₁ = 27 m.

La disposition en cercle desdites premières anodes 5₁ reposant au fond du réservoir représente la disposition optimale pour éviter les interférences entre anodes qui pourraient affecter négativement la densité de courant émise. La disposition en cercle des premières anodes 5₁ ayant les caractéristiques décrites ci-dessus (anodes de 1 m de long, de capacité 50 A et espacées les unes des autres de 3 à 5 m) permet d'obtenir une densité de courant initial de 250 à 275 mA/m² en injectant un courant de 50 A dans les anodes et ainsi obtenir un potentiel au niveau de la surface du réservoir situé dans un rayon de plusieurs dizaines de mètres desdites anodes en quelques dizaines de minutes, voire quelques minutes.

Sur la figure 1, lesdits chapelets d'anodes verticaux 6 sont disposés selon un cercle de même diamètre que lesdits chapelets d'anodes horizontaux 5, mais ce uniquement pour des raisons pratiques de mise en place et de retrait des anodes. Mais, d'un point de vue fonctionnel, la distance à laquelle lesdites secondes anodes verticales 6₁ peuvent être positionnées par rapport à la surface de la paroi latérale du réservoir, peut être différente de celle desdites premières anodes par rapport à ladite paroi latérale. Il n'est pas nécessairement intéressant de rapprocher trop les anodes verticales 6₁ de la surface de la paroi latérale du réservoir, car cela impliquerait de mettre en oeuvre une quantité d'anodes plus importante.

Dans la version préférée de disposition du ou des chapelets d'anodes horizontaux 5 disposés en cercle C₁ tel que représenté sur les figures 1, 5 et 9, ledit cercle C₁ présente un rayon R₁ de 25 à 30 m, tel qu'il délimite une surface intérieure S₁ sensiblement égale à la surface constituée par la portion restante de surface S₂ du fond du réservoir à l'extérieur du cercle constitué par lesdits chapelets horizontaux 5 additionné de la surface S₃ correspondant à la superficie de la portion inférieure de la paroi latérale verticale 3 en partie basse, de hauteur H correspondant à la hauteur de l'extrémité inférieure desdits chapelets d'anodes verticaux 6. (S₁ = S₂ + S₃) pour un rayon R₁ de 25 à 30 m, H représente 1 à 4 m.

En effet, lorsque l'eau de mer, lors du remplissage du réservoir, arrive au niveau des dernières anodes 6₁ à l'extrémité inférieure desdits seconds chapelets d'anodes verticaux 6, sans encore les toucher, seules les premières anodes 5₁ desdits premiers chapelets d'anodes horizontaux 5 situés sur le fond assurent la protection cathodique de la partie basse du réservoir comprenant le fond 2 et la portion de paroi verticale mouillée par l'eau de mer. Ainsi, jusqu'à l'entrée en action desdites anodes 6₁ desdits chapelets d'anodes verticaux 6, lesdits chapelets d'anodes horizontaux 5 reposant sur le fond se trouvent sensiblement au barycentre de la surface du réservoir à protéger comprenant la surface du fond du réservoir S₁ + S₂ et de la partie basse des parois latérales S₃ situées sous les dernières anodes 5₁ suspendues, et les courants extrêmement élevés qui sont injectés en vue d'atteindre le plus rapidement possible le niveau requis de polarisation, se trouvent répartis de manière uniforme et optimale, depuis le centre du réservoir jusqu'à la périphérie du fond et la paroi latérale jusqu'à une hauteur H.

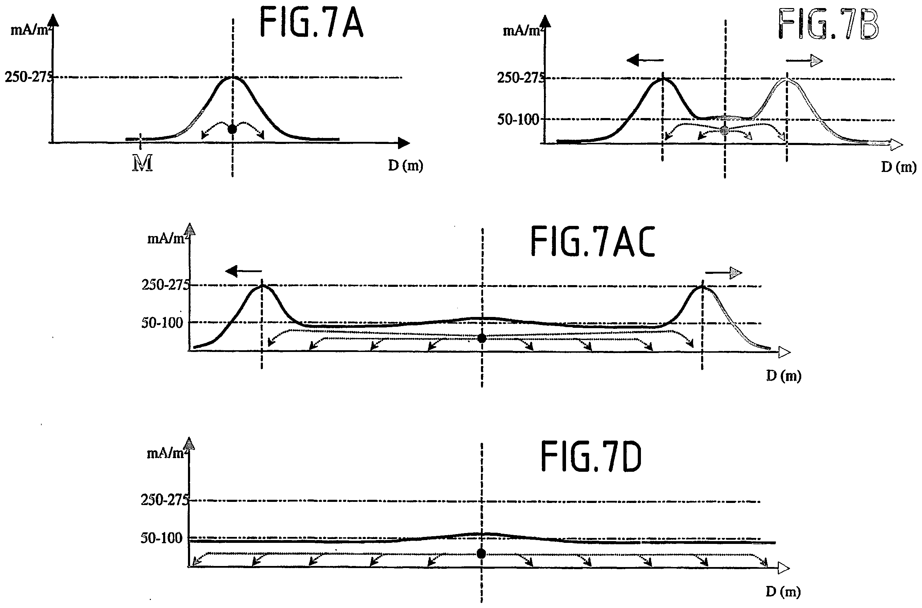

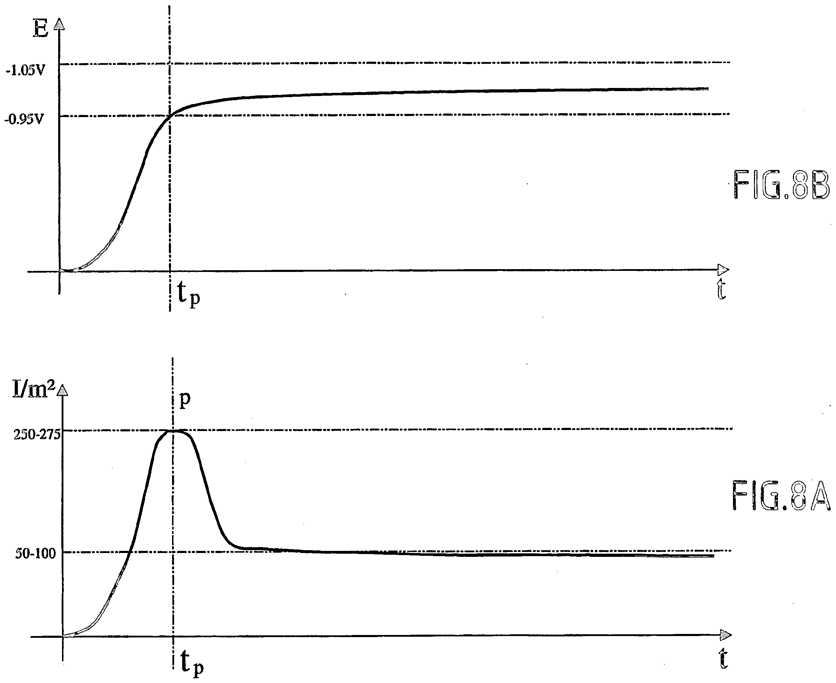

Le processus de polarisation est explicité dans les figures 7a à 7d et 8a-8b qui montrent la variation de la densité de courant (mA/m²) en fonction de sa position par rapport à l'anode dans les figures 7a à 7d. La figure 7a montre le diagramme de densité de courant au début de l'injection de courant dans l'anode et les figures 7b, 7c et 7d sont des diagrammes à des temps croissants. Et, les figures 8a et 8b sont respectivement des mesures de potentiel électrochimique E et densité de courant (I/m²) en un point donné de la surface du réservoir à traiter en fonction du temps.

Sur les figures 8a et 8b, on observe une montée simultanée du potentiel électrochimique E et de la densité de courant jusqu'à un temps tp où le potentiel électrochimique E atteint une valeur d'immunité de -0,95 volts dans le cas présent, caractéristique de la polarisation de l'acier à 9% de nickel utilisé, et où sensiblement simultanément on atteint un pic de densité de courant de 250 à 275 mA/m². En effet, on voit sur les figures 7a à 7d que dès la mise en route de l'injection de courant dans l'anode (fig. 7a), la densité de courant est très importante dans la zone proche de l'anode, puis diminue lorsqu'on s'en écarte. On limite volontairement le courant à injecter à une valeur maximale de 250 à 275 mA/m² , car ce courant est suffisant pour atteindre rapidement le potentiel de protection d'un dit acier (-950mV).

Un processus électrochimique se produit au sein de l'eau de mer chargée en sels minéraux et l'on constate un dépôt calco-magnésien. Ce dépôt calco-magnésien se forme donc entre t= 0 et tp dans les figures 8a et 8b, dans la zone proche de l'anode, puis la densité de courant décroît pour se stabiliser à 50-100 mA/m² tandis que la tension E n'évolue plus sensiblement et se maintient à environ 1 V. Le dépôt calco-magnésien est dû à l'augmentation du pH sur la surface polarisée et crée une barrière naturelle isolante qui a pour effet de faire chuter la densité de courant sur la surface concernée jusqu'à une valeur d'environ 50 à 100 mA/m², suffisante pour maintenir le potentiel E inférieur à - 0,95V dans le cas d'un acier à 9% de nickel empêchant ainsi tout processus de corrosion.

On voit donc qu'en rapprochant au plus près du fond du réservoir l'anode et en augmentant l'intensité du courant d'injection, on accélère de manière radicale le processus de formation de la couche protectrice.

En pratique, en plaçant les anodes 5₁ à quelques centimètres du fond, elles peuvent être immergées en quelques minutes avec un débit de remplissage en eau supérieur à 1000 m³/h, de sorte que, une fois immergées, elles rentrent en action de manière quasi instantanée et en quelques minutes confèrent un début de protection efficace. D'autre part, lorsque l'on injecte une quantité de courant suffisamment forte dans des anodes de forte capacité 50 A, en nombre suffisant et disposées de façon appropriée comme mentionné ci-dessus, on peut alors obtenir une protection cathodique également rapidement en quelques minutes à une distance pouvant aller jusqu'à une dizaine de mètres. Ainsi en quelques dizaines de minutes on arrive à protéger complètement la totalité de la surface du fond du réservoir de manière à éviter toute amorce de corrosion.

Dans un mode préféré de réalisation, on a réalisé le test de vérification d'étanchéité et de résistance mécanique du réservoir par remplissage d'eau, on commence par remplir le réservoir avec de l'eau douce à 1000 m3/h jusqu'à ce que les anodes du fond 5₁ soient complètement immergées, ce qui globalement représente une hauteur de 5 à 10 cm et donc un volume d'eau raisonnable. Puis on injecte du courant dans lesdites anodes et on continue le remplissage à l'eau de mer avec un très fort débit.

On peut utiliser comme « eau douce » aussi bien l'eau du réseau local de distribution d'eau, qu'une eau de rivière ou eau industrielle peu agressive.

Dès que l'eau de mer se mélange à l'eau douce et que le courant est injecté dans les anodes, la surface métallique du fond du réservoir se polarise en configuration de protection cathodique en quelques minutes en raison de la répartition des anodes et des courants extrêmement importants qui sont injectés simultanément sur l'ensemble des anodes reposant sur le fond du réservoir.

Lesdits chapelets d'anodes 5, 6 sont reliés à un ou plusieurs générateurs de courant 9 et un dispositif de contrôle et de commande du courant 9₁ par un câble 8 sortant du réservoir 1 de préférence dans la partie haute de ce dernier. Plusieurs chapelets 5, 6 peuvent être reliés en faisceaux et associés à un seul générateur de courant 9. Toutefois, de préférence, lesdits premiers chapelets d'anodes horizontaux 5 et dits seconds chapelets d'anodes verticaux 6 sont reliés à des générateurs 9 différents ou à un même générateur 9 combiné à des contrôleurs 9a-9c différents, de préférence chaque dit chapelet d'anodes 6 est relié à un générateur 9 ou des contrôleurs 9a-9c différent(s), ce qui permet de contrôler de manière différenciée l'injection de courant dans chacun desdits chapelets 5, 6 - comme décrit ci-après - et ainsi optimiser la protection cathodique en fonction des zones de parois du fond 2 ou paroi latérale 3 protégée, ce qui peut s'avérer nécessaire en fonction de défauts particuliers dans lesdites zones et ce qui est en particulier nécessaire dans le cas de réservoir cylindrique à base polygonale, ces derniers possédant alors des angles fragiles qui peuvent nécessiter une protection cathodique plus importante que le reste du réservoir.

Sur la figure 2, les différents chapelets d'anodes verticaux 6 suspendus à la super structure 4₁ du dôme 4 du réservoir et les différents chapelets horizontaux 5 reposant au fond du réservoir sont reliés électriquement par des câbles 8 à un unique générateur de courant 9, les différents câbles 8 étant suspendus à une potence 20. Une même potence 20 peut être installée sur le mode de réalisation avantageux et préféré décrit sur la figure 9.

En effet, sur la figure 9, le potentiel électrochimique E de la paroi du réservoir 1 est contrôlée en disposant sur le fond 2 du réservoir trois capteurs 10a, 10b et 10c, et sur les parois verticales, sur une génératrice trois capteurs supplémentaires 10d, 10e et 10f. Ces capteurs 10a-10f, par exemple de type cellule de référence Ag/AgCl, sont reliés à une unité de contrôle commande 11 et les valeurs de potentiel électrochimique sont enregistrées pendant toute la durée du test sur un ordinateur 12 de type PC. Le courant basse tension de polarisation, par exemple 24V continu, est fourni par le transformateur-redresseur 9 relié au réseau et connecté à trois contrôleurs électroniques à thyristors 9a-9b-9c pilotés par l'unité centrale de contrôle commande 11. Le contrôleur 9a est relié à l'ensembles desdits seconds chapelets verticaux 6, les contrôleurs 9b et 9c sont reliés respectivement à deux chapelets de dites premières anodes 5 ou deux dites premières anodes continues 5₁ disposées en demi-cercle reposant sur le fond du réservoir, mais isolés de ce dernier comme explicité ci-après en référence à la figure 10.

Les capteurs 10a-10f disposés sur le fond sont avantageusement répartis comme suit :
- le capteur 10a est situé à proximité des anodes circulaires, de manière à contrôler la vague de polarisation décrite sur le diagramme 7a ainsi que son évolution vers 7b,
- le capteur 10b est situé proche de l'angle avec la paroi latérale du cylindre, de manière à contrôler l'évolution du courant de polarisation lors de la montée des eaux.
- un dernier capteur 10c est avantageusement localisé vers le centre du réservoir, de manière à contrôler l'état de polarisation de l'ensemble du fond du réservoir, comme explicité dans les figures 7c-7d.

Des capteurs 10d-10e-10f sont avantageusement installés sur une génératrice de la paroi verticale 3 pour contrôler la polarisation lors de la montée des eaux jusqu'au sommet dudit réservoir.

Pour la clarté de la figure, les câbles de contrôle des capteurs ont été représentés en liaison direct avec le système de contrôle-commande 11, mais en réalité, ils suivent un cheminement similaire à celui des câbles 8 de puissance, c'est à dire qu'il remontent à l'intérieur du réservoir, sortent au niveau du dôme vers une potence 20, pour enfin redescendre vers ledit système de contrôle-commande 11.

La valeur du potentiel électrochimique devant être maintenue au-delà d'une valeur minimale, par exemple inférieure à -0,95V, sans dépasser -1,2V par exemple, dès que ladite valeur du potentiel électrochimique se rapproche de ladite valeur minimale -0.95V, le système de contrôle-commande 11 augmente sensiblement l'intensité du courant d'injection au niveau des contrôleurs 9a-9b-9c concernés. De même lorsque le potentiel électrochimique se rapproche de -1.2V, ledit système de contrôle-commande agit en diminuant sensiblement le courant d'injection concerné.

Comme explicité sur la figure 10, on reste dans l'esprit de l'invention en considérant des anodes réparties sur le fond en plusieurs cercles, ou sous toute autre forme de répartition géométrique, que lesdites anodes soient discontinues et de forme cylindrique, ovale ou polygonale, ou qu'elles soient continues sous la forme d'un câble («anodes filaires») présentant de hautes performances en termes de capacité d'injection de courant, étant entendu que dans toutes ces dispositions, lesdites anodes sont maintenues écartées de la surface par des dispositifs isolants évitant court-circuits directs et court-circuits électrochimiques.

Sur les figures 11 et 12 on a représenté des variantes de réalisation desdites premières anodes 5₁, variantes dans lesquelles celles-ci sont constituées par des premières anodes placées en terminaison de seconds chapelets verticaux 6. Lesdites premières anodes 5₁ reposent sur le fond 2 du réservoir par l'intermédiaire de moyens de support 5₂, ladite seconde anode la plus proche 6₁ située juste au-dessus est positionnée à une hauteur H de 1 à 4 m.

Sur les figures 11 et 12, lesdites premières anodes 5₁ sont disposées horizontalement, c'est-à-dire que leur plus grande dimension est dans la direction horizontale, alors que pour lesdites secondes anodes 6₁, destinées à protéger les parois latérales verticales, celles-ci sont disposées verticalement, c'est-à-dire que leur plus grande dimension est dans la direction verticale. Sur la figure 11, il s'agit de dites premières anodes de forme oblongue maintenues par des moyens de support 5₂ constitués par des disques isolants disposés verticalement et fixés à chaque extrémité de l'anode. Sur la figure 12, lesdites premières anodes 5₁ sont des disques horizontaux soutenus par des moyens de support constitués par des pieds ou plots 5₂ disposés dessous lesdits disques constituant lesdites premières anodes 5₁.

En fin de construction du réservoir et préalablement au remplissage à l'eau de mer, on installe lesdites premières anodes sur le fond dudit réservoir et on les maintient en place, soit par fixation mécanique ou par collage provisoire, soit encore en les stabilisant avec des corps morts, de manière à éviter que l'ensemble ne se déforme ou se déplace lors du remplissage du réservoir, ledit remplissage s'effectuant avec des débits considérables (1000-1500m3/h), engendrant ainsi des remous extrêmement importants.

Lesdits seconds chapelets verticaux sont suspendus à la charpente 4₁ du dôme et les divers câbles d'alimentation en courant et câbles de mesure en provenance des cellules de mesure de potentiel électrochimique, sortent du réservoir au niveau du dôme 4, pour rejoindre les armoires de puissance et de contrôle-commande.

On teste l'étanchéité des parois du réservoir au niveau de la paroi verticale latérale et au niveau du raccordement de la paroi de fond et de la paroi latérale, en observant lesdites parois depuis l'extérieur, notamment dans la zone réservée à l'isolant accessible de par son dimensionnement.

En fin de tests, le réservoir est vidé, puis les cellules de mesure sont retirées, ainsi que lesdites premières anodes et les secondes anodes.

Puis, on rince à l'eau douce à l'aide d'un jet d'eau sous pression, l'intégralité de la paroi pour éliminer toute trace de sel, et on laisse l'eau s'évaporer.

## Revendications

1. Méthode de test d'un réservoir métallique cryogénique avant mise en service, dans laquelle on remplit ledit réservoir (1) avec de l'eau et, le cas échéant, on effectue des mesures appropriées, ledit réservoir étant constitué essentiellement d'acier spécial du type « acier à 9% de nickel » nu, **caractérisée en ce que** l'on réalise les étapes dans lesquelles :
- on remplit ledit réservoir cryogénique métallique (1) avec de l'eau de mer, et
- on assure une protection cathodique temporaire des parois métalliques de fond (2) et latérales (3) dudit réservoir (1), en injectant un courant électrique dans un réseau d'anodes disposées au sein dudit réservoir (1) lorsque celles-ci sont immergées, ledit réseau d'anodes comprenant un réseau de premières anodes (5₁) à proximité immédiate de la paroi de fond du réservoir en nombre suffisant et capable de délivrer une densité de courant permettant d'atteindre le potentiel électro-chimique de protection dudit acier dans ladite paroi de fond quasi instantanément dès que lesdites premières anodes sont mises en action après immersion par l'eau.

2. Méthode selon la revendication 1, **caractérisée en ce qu'**on dispose un réseau de première(s) anode(s) (5₁) à une distance inférieure à 50 cm du fond du réservoir à l'aide de moyens de support (5₂), les dits moyens de support (5₂) et dite(s) première(s) anode(s) (5₁) étant amovibles.

3. Méthode selon la revendication 2, **caractérisée en ce que** lesdites premières anodes (5₁) à proximité du fond (2) du réservoir sont situées à une distance de 2,5 à 20 cm, de préférence de 5 à 10 cm au-dessus du fond du réservoir.

4. Méthode selon la revendication 1 ou 2, **caractérisée en ce que** lesdites premières anodes (5₁) sont disposées le long d'un cercle (C₁) concentrique par rapport au centre de la surface du fond du réservoir et, de préférence, le diamètre dudit cercle (C₁) est dé 40 à 75% de celui de la surface du fond (2) du réservoir.

5. Méthode selon l'une des revendications 2 à 4, **caractérisée en ce que** lesdites premières anodes (5₁) sont réunies par un ou plusieurs câbles en un ou respectivement plusieurs premiers chapelets (5), lesdits premiers chapelets étant disposés sensiblement horizontalement au-dessus et à proximité dudit fond (2) du réservoir.

6. Méthode selon l'une des revendications 2 à 5, **caractérisée en ce que** lesdits moyens de support (5₂) sont constitués par des éléments en matière isolante électriquement reposant sur le fond (2) du réservoir et disposés de part et d'autre de chaque dite première anode (5₁), le cas échéant, le long d'un dit premier chapelet (5).

7. Méthode selon la revendication 5 ou 6, **caractérisée en ce que** lesdits moyens de support (5₂) sont constitués par des disques reposant verticalement sur le fond (2) du réservoir, le diamètre desdits disques étant supérieur à la dimension desdites premières anodes (5₁) dans la direction verticale, lesdits disques étant, le cas échéant, traversés en leur centre par des portions de câble isolé reliant deux dites premières anodes (5₁) successives d'un dit premier chapelet.

8. Méthode selon l'une des revendications précédentes, **caractérisée en ce qu'**on dispose à l'intérieur dudit réservoir desdites premières anodes (5₁) disposées horizontalement à proximité du fond (2) du réservoir, et de secondes anodes (6₁) suspendues verticalement à l'intérieur du réservoir depuis son sommet (4), de préférence de façon amovible, les dites secondes anodes étant de préférence encore reliées en forme de seconds chapelets (6) suspendus verticalement, lesdits seconds chapelets (6) étant de préférence encore régulièrement espacés les uns des autres de manière à s'inscrire de préférence encore dans un cylindre circulaire de même axe que ledit réservoir (1).

9. Méthode selon l'une des revendications précédentes, **caractérisée en ce que** les dernières dites secondes anodes (6₁) disposées à l'extrémité inférieure desdits seconds chapelets (6) suspendus verticalement sont situées à une hauteur (H) du fond (2) de telle sorte que la superficie (S₁) de la surface circulaire délimitée par lesdites premières anodes (5₁), est sensiblement égale à la superficie (S₂) de la surface restante dudit fond (2) du réservoir, additionnée de la surface (S₃) de la portion inférieure de hauteur (H) de la paroi latérale verticale (3) dudit réservoir.

10. Méthode selon l'une des revendications 2 à 10, **caractérisée en ce que** ledit métal du réservoir est de l'acier à 9% de nickel et le potentiel électrochimique dudit acier est de -950 mV, et lesdites premières anodes (5₁) reposant à proximité du fond (2) du réservoir, de telle sorte qu'on peut atteindre une densité de courant de 200 à 400 mA/m².

11. Méthode selon l'une des revendications précédentes, **caractérisée en ce qu'**on dispose contre les parois (2, 3) dudit réservoir (1) des dispositifs (10-11) permettant de mesurer le potentiel électrochimique desdites parois et de commander une pluralité de générateurs électriques (9) alimentant lesdites anodes (5₁, 6₁) de manière à pouvoir réguler la quantité de courant électrique injecté dans les différentes anodes en fonction desdites mesures effectuées en regard des différentes anodes (5₁, 6₁) selon leur localisation.

12. Méthode selon l'une des revendications précédentes, **caractérisée en ce qu'**on remplit tout d'abord ledit réservoir avec de l'eau douce jusqu'à ce que lesdites premières anodes (5₁) reposant à proximité immédiate du fond (2) du réservoir soient complètement immergées, puis on injecte un courant électrique dans lesdites premières anodes (5₁) et on continue le remplissage dudit réservoir avec de l'eau de mer.

13. Réservoir cryogénique (1) à parois métalliques constitué essentiellement d'acier spécial du type "acier à 9% de nickel" nu, utile dans une méthode selon l'une des revendications 1 à 12, **caractérisé en ce qu'**il comprend un système de protection cathodique temporaire comprenant un réseau d'anodes (5₁, 6₁), de préférence disposées de manière amovible au sein dudit réservoir (1), ledit réseau d'anodes comprenant un réseau de premières anodes (5₁) à proximité immédiate de la paroi de fond du réservoir en nombre suffisant et capable de délivrer une densité de courant permettant d'atteindre le potentiel électro-chimique de protection dudit acier dans ladite paroi de fond quasi instantanément dès que lesdites premières anodes sont mises en action après immersion par l'eau.

14. Réservoir selon la revendication 13, **caractérisé en ce que** le diamètre du fond du réservoir est d'au moins 50 m.

15. Réservoir selon la revendication 13 ou 14, **caractérisé en ce que** :
- le dit réseau de première(s) anode(s) (5₁) est disposé à une distance inférieure à 50 cm du fond du réservoir à l'aide de moyens de support (5₂), les dits moyens de support (5₂) et dite(s) première(s) anode(s) (5₁) étant amovibles, et qu'il comprend :
- des dispositifs (10 - 11) disposés contre les parois (2, 3) dudit réservoir, permettant de mesurer le potentiel électrochimique desdites parois (2, 3) et de commander une pluralité de générateurs électriques (9), alimentant lesdites anodes (5₁, 6₁) de manière à pouvoir réguler la quantité de courant électrique injecté dans les différentes anodes en fonction desdites mesures effectuées en regard des différentes anodes (5₁, 6₁) selon leur localisation.

## Patentansprüche

1. Verfahren zum Prüfen eines kryogenen Metallbehälters vor Inbetriebnahme, bei der der Behälter (1) mit Wasser gefüllt wird und gegebenenfalls geeignete Messungen durchgeführt werden, wobei der Behälter im Wesentlichen aus blankem Spezialstahl vom Typ "Stahl mit 9 % Nickel" hergestellt ist, **dadurch gekennzeichnet, dass** die folgenden Schritte durchgeführt werden, bei denen:
- der kryogene Metallbehälter (1) mit Meereswasser gefüllt wird, und
- ein vorübergehender Kathodenschutz der metallischen Boden- (2) und Seitenwände (3) des Behälters (1) gewährleistet wird, wobei ein elektrischer Strom in ein Netz von Anoden, die in dem Behälter (1) angeordnet sind, eingeleitet wird, wenn diese eingetaucht sind, wobei das Anodennetz ein Netz von ersten Anoden (5₁) in unmittelbarer Nähe der Bodenwand des Behälters in ausreichender und geeigneter Zahl umfasst, um eine Stromdichte zu liefern, die es ermöglicht, das elektrochemische Schutzpotential des Stahls in der Bodenwand gleichsam sofort zu erreichen, sobald die ersten Anoden nach Eintauchen in das Wasser aktiv gesetzt sind.

2. Verfahren gemäß Anspruch 1, **dadurch gekennzeichnet, dass** ein Netz von erste(n) Anode(n) (5₁) in einem Abstand unter 50 cm zum Boden des Behälters mit Hilfe von Tragmitteln (5₂) angeordnet wird, wobei die Tragmittel (5₂) und die erste(n) Anode(n) (5₁) abnehmbar sind.

3. Verfahren gemäß Anspruch 2, **dadurch gekennzeichnet, dass** die ersten Anoden (5₁) in der Nähe des Bodens (2) des Behälters in einem Abstand von 2,5 bis 20 cm, vorzugsweise von 5 bis 10 cm, über dem Boden des Behälters angeordnet sind.

4. Verfahren gemäß Anspruch 1 oder 2, **dadurch gekennzeichnet, dass** die ersten Anoden (5₁) entlang eines konzentrischen Kreises (C₁) in Bezug zur Mitte der Fläche des Bodens des Behälters angeordnet sind, und vorzugsweise der Durchmesser des Kreises (C₁) 40 bis 75 % von jenem der Fläche des Bodens (2) des Behälters ausmacht.

5. Verfahren gemäß einem der Ansprüche 2 bis 4, **dadurch gekennzeichnet, dass** die ersten Anoden (5₁) durch ein oder mehrere Kabel zu einem bzw. mehreren ersten Strängen (5) zusammengefasst sind, wobei die ersten Stränge im Wesentlichen horizontal über dem und in der Nähe des Bodens (2) des Behälters angeordnet sind.

6. Verfahren gemäß einem der Ansprüche 2 bis 5, **dadurch gekennzeichnet, dass** die Tragmittel (5₂) von Elementen aus elektrisch isolierendem Material gebildet sind, die am Boden (2) des Behälters liegen und beiderseits jeder ersten Anode (5₁) gegebenenfalls entlang eines ersten Stranges (5) angeordnet sind.

7. Verfahren gemäß Anspruch 5 oder 6, **dadurch gekennzeichnet, dass** die Tragmittel (5₂) von Scheiben gebildet sind, die vertikal am Boden (2) des Behälters stehen, wobei der Durchmesser der Scheiben größer als die Dimension der ersten Anoden (5₁) in Vertikalrichtung ist, wobei die Scheiben gegebenenfalls in ihrer Mittel von Isolierkabelabschnitten durchquert werden, die zwei erste aufeinanderfolgende Anoden (5₁) eines ersten Stranges verbinden.

8. Verfahren gemäß einem der vorhergehenden Ansprüche, **dadurch gekennzeichnet, dass** innerhalb des Behälters erste Anoden (5₁), die horizontal in der Nähe des Bodens (2) des Behälters angeordnet sind, und zweite Anoden (6₁), die vertikal im Inneren des Behälters von seiner Spitze (4) vorzugsweise abnehmbar aufgehängt sind, wobei die zweiten Anoden ferner vorzugsweise in Form von zweiten Strängen (6), die vertikal aufgehängt sind, verbunden sind, wobei die zweiten Stränge (6) ferner vorzugsweise regelmäßig zueinander beabstandet sind, um sich ferner vorzugsweise in einen kreisförmigen Zylinder mit derselben Achse wie der Behälter (1) einzuschreiben.

9. Verfahren gemäß einem der vorhergehenden Ansprüche, **dadurch gekennzeichnet, dass** die letzten zweiten Anoden (6₁), die am unteren Ende der zweiten vertikal aufgehängten Stränge (6) angeordnet sind, in einer Höhe (H) des Bodens (2) angeordnet sind, so dass die Oberfläche (S₁) der kreisförmigen Fläche, die von den ersten Anoden (5₁) begrenzt ist, im Wesentlichen gleich der Oberfläche (S₂) der restlichen Fläche des Bodens (2) des Behälters, zuzüglich der Fläche (S₃) des unteren Höhenabschnitts (H) der vertikalen Seitenwand (3) des Behälters, ist.

10. Verfahren gemäß einem der Ansprüche 2 bis 10, **dadurch gekennzeichnet, dass** das Metall des Behälters Stahl mit 9 % Nickel und das elektrochemische Potential des Stahls -950 mV ist, wobei die ersten Anoden (5₁) in der Nähe des Bodens (2) des Behälters liegen, so dass eine Stromdichte von 200 bis 400 mA/m² erzielt werden kann.

11. Verfahren gemäß einem der vorhergehenden Ansprüche, **dadurch gekennzeichnet, dass** an den Wänden (2, 3) des Behälters (1) Vorrichtungen (10-11) angeordnet werden, die es ermöglichen, das elektrochemische Potential der Wände zu messen und eine Vielzahl von elektrischen Generatoren (9) zu steuern, die die Anoden (5₁, 6₁) speisen, um die Menge an elektrischem Strom, der in die verschiedenen Anoden eingeleitet wird, in Abhängigkeit von den gegenüber den verschiedenen Anoden (5₁, 6₁) je nach ihrer Lokalisierung durchgeführten Messungen regulieren zu können.

12. Verfahren gemäß einem der vorhergehenden Ansprüche, **dadurch gekennzeichnet, dass** zuerst der Behälter mit Süßwasser gefüllt wird, bis die ersten Anoden (5₁), die in unmittelbarer Nähe des Bodens (2) des Behälters liegen, vollkommen eingetaucht sind, dann ein elektrischer Strom in die ersten Anoden (5₁) eingeleitet wird, und das Füllen des Behälters mit Meereswasser fortgesetzt wird.

13. Kryogener Behälter (1) mit Metallwänden, der im Wesentlichen aus blankem Spezialstahl vom Typ "Stahl mit 9 % Nickel" gebildet ist, der bei einem Verfahren gemäß einem der Ansprüche 1 bis 12 eingesetzt wird, **dadurch gekennzeichnet, dass** er ein System zum vorübergehenden Kathodenschutz besitzt, umfassend ein Netz von Anoden (5₁, 6₁), die vorzugsweise abnehmbar innerhalb des Behälters (1) angeordnet sind, wobei das Anodennetz ein Netz von ersten Anoden (5₁) in unmittelbarer Nähe der Bodenwand des Behälters in ausreichender und geeigneter Zahl umfasst, um eine Stromdichte zu liefern, die es ermöglicht, das elektrochemische Schutzpotential des Stahls in der Bodenwand gleichsam sofort zu erreichen, sobald die ersten Anoden nach Eintauchen in das Wasser aktiv gesetzt sind.

14. Behälter gemäß Anspruch 13, **dadurch gekennzeichnet, dass** der Durchmesser des Bodens des Behälters mindestens gleich 50 m ist.

15. Behälter gemäß Anspruch 13 oder 14, **dadurch gekennzeichnet, dass**:
- das Netz von erste(n) Anode(n) (5₁) in einem Abstand von weniger als 50 cm zum Boden des Behälters mit Hilfe von Tragmitteln (5₂) angeordnet ist, wobei die Tragmittel (5₂) und die erste(n) Anode(n) (5₁) abnehmbar sind, und dass er umfasst:
- Vorrichtungen (10-11), die gegen die Wände (2, 3) des Behälters angeordnet sind, die es ermöglichen, das elektrochemische Potential der Wände (2, 3) zu messen und eine Vielzahl von elektrischen Generatoren (9) zu steuern, die die Anoden (5₁, 6₁) speisen, um die Menge an elektrischen Strom, der in die verschiedenen Anoden eingeleitet wird, in Abhängigkeit von den gegenüber den verschiedenen Anoden (5₁, 6₁) je nach ihrer Lokalisierung durchgeführten Messungen, regulieren zu können.

## Claims

1. A method of testing a cryogenic metal tank prior to being put into service, in which said tank (1) is filled with water and appropriate measurements are performed where necessary, said reservoir being constituted essentially by special steel of the bare "9% nickel steel" type, the method being **characterized in that** the following steps are performed:
• filling said metal cryogenic tank (1) with sea water; and
• providing temporary cathodic protection for the metal bottom and side walls (2, 3) of said tank (1) by disposing an array of anodes within said tank (1) and by injecting an electric current into the array of anodes once they become immersed, said array of anodes comprising a first anode array (5₁) in the immediate vicinity of the bottom wall of the tank, said anodes being sufficient in number and being capable of delivering current density that enables the electrochemical potential for protecting said steel in said bottom wall to be reached almost instantaneously as soon as said first anodes are put into action after being immersed in water.

2. A method according to claim 1, **characterized in that** a first anode array (5₁) is disposed at a distance of less than 50 cm from the bottom of the tank using support means (5₂), said support means (5₂) and said first anode(s) (5₁) being removable.

3. A method according to claim 2, **characterized in that** said first anodes (5₁) close to the bottom (2) of the tank are situated above the bottom of the tank at a distance lying in the range 2.5 cm to 20 cm, and preferably in the range 5 cm to 10 cm.

4. A method according to claim 1 or claim 2, **characterized in that** said first anodes (5₁) are disposed along a circle (C₁) that is concentric about the center of the bottom surface of the tank, and the diameter of said circle (C₁) is preferably 40% to 75% the diameter of the bottom surface (2) of the tank.

5. A method according to any one of claims 2 to 4, **characterized in that** said first anodes (5₁) are connected to one another by one or more cables constituting one or more first strings (5), said first strings being disposed substantially horizontally above and in the vicinity of said bottom (2) of the tank.

6. A method according to any one of claims 2 to 5, **characterized in that** said support means (5₂) are constituted by elements of electrically-insulating material resting on the bottom (2) of the tank and disposed at opposite ends of each said first anode (5₁) where appropriate, along a said first string (5).

7. A method according to claim 5 or claim 6, **characterized in that** said support means (5₂) are constituted by disks resting vertically on the bottom (2) of the tank, the diameter of said disks being greater than the dimension of said first anodes (5₁) in the vertical direction, the centers of said disks, where appropriate, having portions of insulated cable passing therethrough interconnecting two successive ones of said first anodes (5₁) of a said first string.

8. A method according to any preceding claim, **characterized in that** there are placed inside said tank said first anodes (5₁) disposed horizontally close to the bottom (2) of the tank, and second anodes (6₁) that are suspended vertically inside the tank from its top (4), preferably in removable manner, said second anodes also preferably being connected together in the form of second strings (6) that are suspended vertically, said second strings (6) also preferably being regularly spaced apart from one another in such a manner as to be inscribed, also preferably, in a circular cylinder having the same axis as said tank (1).

9. A method according to any preceding claim, **characterized in that** the last ones of said second anodes (6₁) disposed at the bottom ends of said vertically suspended second strings (6) are situated at a height H from the bottom (2) in such a manner that the area (S₁) of the circular surface defined by said first anodes (5₁) is substantially equal to the sum of the area (S₂) of the remaining surface of said bottom (2) of the tank plus the area (S₃) of the bottom portion of height H of the vertical side wall (3) of said tank.

10. A method according to any one of claims 2 to 9, **characterized in that** said metal of the tank is 9% nickel steel and the electrochemical potential of said steel is -950 mV, and said first anodes (5₁) rest close to the bottom (2) of the tank in such a manner as to enable a current density of 200 mA/m² to 400 mA/m² to be achieved.

11. A method according to any preceding claim, **characterized in that** devices (10, 11) are placed against the walls (2, 3) of said tank (1) in order to measure the electrochemical potential of said walls and control a plurality of electricity generators (9) feeding said anodes (5₁, 6₁) in such a manner as to be able to regulate the quantity of electric current that is injected into the various anodes as a function of said measurements made in association with the various anodes (5₁, 6₁), depending on their locations.

12. A method according to any preceding claim, **characterized in that** said tank is initially filled with fresh water until said first anodes (5₁) lying in the immediate vicinity of the bottom (2) of the tank are substantially completely immersed, after which electric current is injected into said first anodes (5₁) and the filling of said tank is continued using sea water.

13. A cryogenic tank (1) having bare metal walls constituted essentially by special steel of the bare "9% nickel steel" type, suitable for use in the method according to any one of claims 1 to 12, the tank being **characterized in that** it includes a temporary cathodic protection system comprising an array of anodes (5₁, 6₁), preferably disposed removably within said tank (1), said array of anodes comprising a first anode array (5₁) in the immediate vicinity of the bottom wall of the tank, said anodes being sufficient in number and being capable of delivering current density that enables the electrochemical potential for protecting said steel in said bottom wall to be reached almost instantaneously as soon as said first anodes are put into action after being immersed in water.

14. A tank according to claim 13, **characterized in that** the diameter of the bottom of the tank is not less than 50 m.

15. A tank according to claim 13 or 14, **characterized in that**:
- said array of first anode(s) (5₁) is disposed at a distance of less than 50 cm from the bottom of the tank using support means (5₂), said support means (5₂) and said first anode(s) (5₁) being removable; and that it comprises:
- devices (10, 11) placed against the walls (2, 3) of said tank (1) in order to measure the electrochemical potential of said walls (2, 3) and control a plurality of electricity generators (9) feeding said anodes (5₁, 6₁) in such a manner as to be able to regulate the quantity of electric current that is injected into the various anodes as a function of said measurements made in association with the various anodes (5₁, 6₁), depending on their locations.
